(19) Europäisches Patentamt / European Patent Office / Office européen des brevets

(11) **EP 2 242 023 B1**

(12) **EUROPÄISCHE PATENTSCHRIFT**

(45) Veröffentlichungstag und Bekanntmachung des Hinweises auf die Patenterteilung:
**04.01.2012 Patentblatt 2012/01**

(51) Int Cl.:
**G06T 11/00** *(2006.01)*

(21) Anmeldenummer: **09009114.1**

(22) Anmeldetag: **13.07.2009**

(54) **Verfahren zur bewegungskompensierten Rekonstruktion eines dreidimensionalen endgültigen Bilddatensatzes**

Method for motion-compensated reconstruction of a three-dimensional image dataset

Procédé de reconstruction à mouvements compensés d'un ensemble de données d'image tridimensionnelles

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **16.04.2009 EP 09005443**

(43) Veröffentlichungstag der Anmeldung:
**20.10.2010 Patentblatt 2010/42**

(73) Patentinhaber: **SIEMENS AKTIENGESELLSCHAFT**
**80333 München (DE)**

(72) Erfinder:
• **Lauritsch, Günter**
**90427 Nürnberg (DE)**
• **Rohkohl, Christopher**
**91052 Erlangen (DE)**

(56) Entgegenhaltungen:
• **CHRISTOPHER ROHKOHL ET AL: "C-arm CT: Reconstruction of dynamic high contrast objects applied to the coronary sinus" NUCLEAR SCIENCE SYMPOSIUM CONFERENCE RECORD, 2008. NSS '08. IEEE (19-25 OCT. 2008), IEEE, PISCATAWAY, NJ, USA, 19. Oktober 2008 (2008-10-19), Seiten 5113-5120, XP031418656 ISBN: 978-1-4244-2714-7**
• **BLONDEL CHRISTOPHE ET AL: "Reconstruction of coronary arteries from a single rotational X-ray projection sequence" IEEE TRANSACTIONS ON MEDICAL IMAGING, IEEE SERVICE CENTER, PISCATAWAY, NJ, US LNKD- DOI:10.1109/TMI.2006.873224, Bd. 25, Nr. 5, 1. Mai 2006 (2006-05-01), Seiten 653-663, XP002506502 ISSN: 0278-0062**
• **CHRISTOPHE BLONDEL ET AL: "3D tomographic reconstruction of coronary arteries using a precomputed 4D motion field; 3D tomographic reconstruction of coronary arteries" PHYSICS IN MEDICINE AND BIOLOGY, TAYLOR AND FRANCIS LTD. LONDON, GB LNKD- DOI: 10.1088/0031-9155/49/11/006, Bd. 49, Nr. 11, 7. Juni 2004 (2004-06-07), Seiten 2197-2208, XP020023726 ISSN: 0031-9155**
• **BYRD R H ET AL: "A limited memory algorithm for bound constrained optimization" SIAM JOURNAL ON SCIENTIFIC COMPUTING USA, Bd. 16, Nr. 5, September 1995 (1995-09), Seiten 1190-1208, XP009137721 ISSN: 1064-8275**

**Beschreibung**

Die Erfindung betrifft ein Verfahren zur bewegungskompensierten Rekonstruktion eines dreidimensionalen endgültigen Rekonstruktionsdatensatzes eines während eines Aufnahmezeitraums bewegten Aufnahmevolumens aus zweidimensionalen Projektionsbildern unter Verwendung eines dynamischen, insbesondere analytischen Rekonstruktionsalgorithmus.

Werden Objekte oder Teile von Objekten, also Aufnahmevolumina, anhand von zweidimensionalen strahlungsbasierten Durchleuchtungsbildern, den sogenannten Projektionsbildern, aufgenommen, um dann aus den Projektionsbildern einen dreidimensionalen Rekonstruktionsdatensatz zu ermitteln, der folglich das Aufnahmevolumen dreidimensional zeigt, treten immer dann Probleme auf, wenn sich das Aufnahmevolumen selber und/oder Bereiche innerhalb des Aufnahmevolumens bewegen.

Von besonderem Interesse ist dieses Problem im medizinischen Bereich, wo während der Aufnahme eines Patienten eine Vielzahl von Bewegungen auftreten können, insbesondere Organbewegungen (beispielsweise Herzbewegung, Abdomenbewegung), Patientenbewegungen (beispielsweise Schädelbewegung, Atembewegung) oder auch externe Bewegungen (beispielsweise bei instabilen Aufnahmesystemen, insbesondere wackelnde C-Bögen, oder ungenaue Abtastbahnen bei Radiographiesystemen). Derartige Bewegungen senken die Bildqualität des dreidimensionalen Rekonstruktionsdatensatzes und erschweren somit insbesondere eine Beurteilung der Bilddaten, beispielsweise im Hinblick auf eine durchzuführende Überwachung/Kontrolle oder Diagnostik. Eine wichtige Anwendung solcher dreidimensionaler Rekonstruktionen ist beispielsweise die C-Bogen-CT, bei der mittels einer C-Bogen-Röntgeneinrichtung auch während einer Intervention dreidimensionale Bilder aus angiographischen Projektionsdaten ermittelt werden können. Gerade im Bereich von Herzaufnahmen und deren Rekonstruktion bestehen jedoch herausfordernde Probleme, da die lange Aufnahmezeit von mehreren Sekunden mehrere Herzschläge umfasst, so dass aufgrund der Bewegung Bildartefakte, beispielsweise Verschmierungen oder Streifen, auftreten können.

Zur Lösung dieses Problems sind im Stand der Technik bereits einige Ansätze bekannt, die jedoch allesamt nachteilbehaftet sind.

So wurde vorgeschlagen, unter einer Periodizitätsannahme der Bewegung ein sogenanntes "Gating" durchzuführen. Solche Verfahren erfordern, wie bereits erwähnt, dass die Bewegung als periodisch (zeitlich wiederkehrend) angenommen werden kann und ein Bewegungssignal während der Aufnahme aufgezeichnet wurde. Ein solches Bewegungssignal kann beispielweise aus einem Elektrokardiogramm (EKG) oder aus einem Atemgürtel (für die Atembewegung) abgeleitet werden. Vor der Rekonstruktion wird nun eine Zielbewegungsphase ausgewählt. Für die eigentliche Rekonstruktion werden dann nur die Projektionsbilder verwendet, deren Bewegungsphase der Zielbewegungsphase ähnlich ist. Dieses Verfahren friert mithin die Bewegung mittels Gating ein. Es wird folglich keinerlei Bewegung berechnet. Hierbei ist nachteilhaft, dass in häufigen Fällen bereits die Periodizitätsannahme nicht korrekt ist. Beispielsweise treten bei Patienten, die wegen Herzfehlern behandelt oder untersucht werden, häufig Rhythmusstörungen auf, so dass keine Periodizität mehr vorliegt. Ein anderes, schwerwiegendes Problem ist, dass nicht alle Projektionsbilder, folglich nicht alle aufgenommene Projektionsdaten, verwendet werden können. Dies führt zu einer sehr langen Datenaufnahme oder zu qualitativ minderwertigen Rekonstruktionen. Informationen über die Bewegung werden ebenso nicht erhalten.

Ein zweites vorgeschlagenes Verfahren betrifft die Bewegungsschätzung unter der Annahme der Periodizität der Bewegung.

Dabei wird das bereits beschriebene Gating nun für mehrere Zielbewegungsphasen durchgeführt. Die Bewegung, die zwischen zwei Bewegungsphasen stattfindet, wird über eine 3D-3D-Registrierung der Rekonstruktionen erhalten. Auch bei diesem Verfahren führt die nicht korrekte Periodizitätsannahme zu Fehlern und Artefakten, insbesondere kann sogar die Registrierung selber fehlschlagen. Wiederum können nicht alle Projektionsbilder verwendet werden, da bestimmte Bewegungsphasen, insbesondere Herzphasen, herausgegriffen werden.

Ein Verfahren der vorstehenden Art ist beispielsweise in dem Artikel von Christopher Rotkohl et al., "C-arm CT: Reconstruction of dynamic high contrast objects applied to the coronary sinus", Nuclear Science Symposium 2008 Conference Record, IEEE (19-25 OCT. 2008), Piscataway, NJ, USA, ISBN 978-1-4244-2714-7, Seiten 5113-5120, beschrieben.

Bei iterativen Verfahren wird weiterhin vorgeschlagen, eine Bewegungsschätzung in iterative Rekonstruktionsalgorithmen einzubinden. Dabei wird von einer periodischen Bewegung ausgegangen, um das Problem überhaupt noch kontrollieren zu können, denn die Bewegung und das zu rekonstruierende Volumen sollen iterativ gemeinsam geschätzt werden. Nachteilhafterweise liegt in diesem Fall eine große Anzahl von Freiheitsgraden vor, so dass sich ein schlecht gestelltes hochdimensionales Optimierungsproblem ergibt. Zudem ist das Konvergenzverhalten völlig unbekannt, so dass die Methode kaum kontrollierbar ist.

Schließlich wurde vorgeschlagen, Marker, insbesondere Röntgenmarker, im Projektionsbild nachzuverfolgen. Dabei werden während der Aufnahme der Projektionsbilder im Aufnahmevolumen bekannte geometrische Muster oder Markierungen platziert. Diese werden dann in jedem Projektionsbild, beispielsweise über Segmentierungsverfahren oder dergleichen, lokalisiert. Aus den so erhaltenen Bildpositionen kann die dreidimensionale Bewegung errechnet werden. Dies hat jedoch den Nachteil, dass die Platzierung von Markern im Aufnahmevolumen notwendig ist. Insbesondere bei Anwendungen in der Medizin, also bei inneren Organbewegungen, ist das Verfahren nur unter erschwerten Umständen oder überhaupt nicht anwendbar.

Ist die Bewegung erst ganz oder teilweise, insbesondere durch eine der genannten Bewegungsschätzungen, bekannt, so kann ein sogenannter dynamischer Rekonstruktionsalgorithmus (bewegungskompensierter Rekonstruktionsalgorithmus) verwendet werden. Dabei handelt es sich um Erweiterungen bekannter Rekonstruktionsalgorithmen im Hinblick auf eine bereits bekannte Bewegung. Dabei wird Objektbewegung als ein Wechsel des Projektionsoperators angesehen, d. h., der Strahl von der Strahlungsquelle zum Detektor nimmt einen neuen Weg durch das aufgenommene Objekt/das Aufnahmevolumen. Sowohl für analytische als auch für iterative Rekonstruktionsalgorithmen ist inzwischen eine Vielzahl von derartigen dynamischen Varianten bekannt. Dennoch bleibt das herausfordernste Problem die Schätzung der Bewegung selber, wozu nur die genannten, ungenauen Methoden bekannt sind.

Der Erfindung liegt daher die Aufgabe zugrunde, ein Verfahren zur bewegungskompensierten Rekonstruktion anzugeben, das ohne implizite Modellvorstellungen, insbesondere ohne eine Annahme der Periodizität der Bewegung, auskommt, und dennoch auf einfache Weise eine hervorragende Bildqualität bei Vermeidung von Artefakten erlaubt.

Zur Lösung dieser Aufgabe ist bei einem Verfahren der eingangs genannten Art erfindungsgemäß vorgesehen, dass zur Ermittlung der insbesondere ortsabhängigen, insbesondere nicht periodischen Bewegung während der Aufnahmezeit

- ein eine mögliche Bewegung in wenigstens einem Bewegungsmodell, in dem die Zeitabhängigkeit durch die Aufnahmezeit beschrieben wird, beschreibender Anfangsparametersatz als aktueller Parametersatz angesetzt wird,
- im Rahmen eines Optimierungsverfahrens bezüglich des Parametersatzes ein aktueller Rekonstruktionsdatensatz mittels des dynamischen Rekonstruktionsalgorithmus unter Berücksichtigung der durch den aktuellen Parametersatz beschriebenen möglichen Bewegung ermittelt und anhand einer ein Bewertungsmaß umfassenden Zielfunktion bewertet wird,
- bei Erfüllung eines Konvergenzkriteriums für die Zielfunktion das Optimierungsverfahren beendet und der aktuelle Rekonstruktionsdatensatz als endgültiger Rekonstruktionsdatensatz verwendet wird.

Die Erfindung schlägt also vor, eine formale Beschreibung der Bewegung anhand eines Parametersatzes, der beispielsweise als Parametervektor geschrieben werden kann, anzusetzen. Dieser definiert eine bestimmte Bewegung in einem Bewegungsmodell. Das Bewegungsmodell ist dabei als eine insbesondere invertierbare Funktion zu verstehen, bei der ein bestimmtes Voxel im Rekonstruktionsdatensatz zum Zeitpunkt der Aufnahme eines bestimmten Projektionsbildes einem neuen Ort abhängig von den Parametern des Parametersatzes zugeordnet wird. Der Aufnahmezeitpunkt wird mithin durch ein Projektionsbild, also beispielsweise dessen Aufnahmerang als natürliche Zahl, beschrieben. Darin liegt ein deutlicher Unterschied zu den beschriebenen bekannten Verfahren, die allesamt von einer Periodizität ausgingen, mithin anhand einer Bewegungsphase die Zeit parametrierten, während vorliegend allgemein der Aufnahmezeitpunkt relevant ist. Allgemein ist beim vorliegenden Verfahren folglich keine derartige Modellannahme wie beispielweise die Periodizität der Bewegung nötig. Es sei jedoch an dieser Stelle angemerkt, dass derartige Modellannahmen über zusätzliche Nebenbedingungen im noch näher zu diskutierenden Optimierungsverfahren optional eingebunden werden können. Durch die allgemeine Formulierung jedoch ermöglicht das vorgeschlagene Verfahren, welches mithin ein allgemeines und vereinheitlichtes Konzept zur Bewegungsschätzung aus Projektionsdaten darstellt, die Bewegungsschätzung in verschiedensten Anwendungsszenarien.

Die die Bewegung beschreibenden Parameter im Parameterdatensatz sollen im erfindungsgemäßen Verfahren nun über ein Optimierungsverfahren optimiert werden, das bedeutet, es wird der dynamische Rekonstruktionsalgorithmus genutzt, um zu ermitteln, wie die Rekonstruktion bei der durch den aktuellen Parametersatz im Bewegungsmodell beschriebenen möglichen Bewegung aussieht. Es erfolgt, wie bei Optimierungsverfahren üblich, eine Bewertung dieser Rekonstruktion, also des aktuellen Rekonstruktionsdatensatzes, insbesondere, wie später noch genauer dargestellt werden wird, im Hinblick auf die Qualität der Rekonstruktion, durch eine Zielfunktion. Ist das Konvergenzkriterium nicht erfüllt, wird im Rahmen des Optimierungsverfahrens eine Veränderung des Parametersatzes ermittelt, woraufhin eine erneute Rekonstruktion aufgrund des veränderten Parametersatzes als aktueller Parametersatz ermittelt wird. Erst wenn ein Konvergenzkriterium erfüllt ist, also eine gewünschte Rekonstruktionsqualität/Genauigkeit der Beschreibung der Bewegung erreicht ist, wird das Optimierungsverfahren beendet und es wird eine endgültige Beschreibung der Bewegung und ein endgültiger Rekonstruktionsdatensatz erhalten.

Dabei wird im erfindungsgemäßen Verfahren im Gegensatz zu anderen bekannten Verfahren lediglich bezüglich der die Bewegung beschreibenden Parameter des Parametersatzes optimiert, deren Zahl von der Komplexität der Bewegung abhängt. Die Anzahl der zu optimierenden Parameter ist also vergleichsweise gering, das bedeutet, das Problem ist besser konditioniert. Dies hat viele Vorteile, so ist die Optimierung beispielsweise in der Regel schneller und robuster.

Schließlich ist es beim erfindungsgemäßen Verfahren nicht notwendig, Marker in das Aufnahmevolumen einzubringen und in den Projektionsbildern nachzuverfolgen, das bedeutet, das Verfahren kann Systeminstabilitäten sowie innere Bewegungen ebenfalls bestimmen.

Während sich das Verfahren grundsätzlich auch für iterative Rekonstruktionsalgorithmen realisieren lassen wird, ist es doch besonders vorteilhaft für analytische Rekonstruktionsalgorithmen geeignet, so dass beispielsweise als Rekonstruktionsalgorithmus ein dynamischer FDK-Algorithmus (Feldkamp-Davis-Kress-Algorithmus) verwendet werden kann. Dies begründet sich insbesondere darin, dass gradientenbasierte Optimierungsverfahren dann besonders vorteilhaft anwendbar sind. Denn bei analytischen Rekonstruktionsalgorithmen lässt sich deren Ableitung in Bezug auf die Parameter des Parametersatzes meist ebenso analytisch formulieren, so dass - bei einer entsprechenden Wahl des Bewertungsmaßes bzw. der Zielfunktion - auch der Gradient der Zielfunktion angegeben werden kann. So ist die Verwendung effizienter Optimierungsverfahren auf einfache Art und Weise möglich, wodurch weitere Vorteile erhalten werden können.

Das erfindungsgemäße Verfahren lässt sich aufgrund seiner allgemeinen und vereinheitlichten Beschreibung in vielen Anwendungsgebieten nutzen. Besonders vorteilhaft lässt es sich jedoch in der Medizintechnik, insbesondere bei das Herz umfassenden und/oder der Herzbewegung und/oder der Atembewegung unterworfenen Aufnahmevolumina, einsetzen. Da es bei der vorliegenden Erfindung erstmals möglich ist, eine Bewegungsabschätzung/Bestimmung ohne Periodizitätsannahme durchzuführen, ermöglicht sie eine Bewegungskorrektur auch bei irregulären Herzschlägen sowie eine Korrektur bei zusätzlicher Atem- und Patientenbewegung. Allerdings sind auch starre Patientenbewegungen, beispielsweise bei Aufnahmen im Kopfbereich, durch das erfindungsgemäße Verfahren leicht zu bestimmen, so dass bewegungskorrigierte Rekonstruktionsdatensätze erhalten werden.

Ein besonderer Vorteil des erfindungsgemäßen Verfahrens ist es auch, dass am Ende durch den Parametersatz eine Beschreibung der Bewegung vorliegt, die selbstverständlich auch weiter verarbeitet und genutzt werden kann. So kann vorgesehen sein, dass der dem endgültigen Rekonstruktionsdatensatz zugrundeliegende endgültige Parametersatz gespeichert wird. Die Parameter können dann genutzt werden, um zusätzliche Darstellungen - beispielsweise zu unterschiedlichen Zeitpunkten - zu erzeugen, wobei insbesondere aufgrund des Parametersatzes eine vierdimensionale Darstellung des Aufnahmevolumens erzeugt und dargestellt werden kann. Denn durch den endgültigen Parametersatz ist ja bekannt, wie sich jeder durch ein Voxel beschriebene Punkt des Aufnahmevolumens über die Aufnahmezeit hinweg bewegt, so dass letztlich eine Darstellung der Bewegung selber in einer vierdimensionalen Darstellung möglich ist. Derartiges ist beispielsweise von großem Nutzen bei Herzuntersuchungen, wo dann die Arrhythmien und ihre Folgen auch visuell erfasst werden können. Selbstverständlich kann der endgültige Parametersatz auch insbesondere mathematisch weiter ausgewertet werden, so dass beispielsweise aus dem endgültigen Parametersatz die Bewegung beschreibende Auswerteparameter, insbesondere Arrhythmien beschreibende Auswerteparameter, ermittelt werden können.

Sind in der Bewegung des Aufnahmevolumens starre Bewegungen enthalten oder ist die Bewegung insgesamt eine starre Bewegung, kann vorgesehen sein, dass als Bewegungsmodell ein affine Bewegungen beschreibendes Bewegungsmodell verwendet wird. Dann können Translationen und Rotationen des gesamten Aufnahmevolumens durch das Bewegungsmodell hinreichend beschrieben werden.

In weiterer Ausgestaltung der Erfindung kann, insbesondere, wenn ein der Herzbewegung und/oder der Atembewegung unterworfenes Aufnahmevolumen betrachtet wird, vorgesehen sein, dass als Bewegungsmodell ein vierdimensionales Spline-Modell, vorzugsweise unter Verwendung von insbesondere kubischen B-Spline-Basisfunktionen, verwendet wird. Auf diese Weise können ortsabhängige Bewegungen lokal beschrieben werden, wobei eine derartige Beschreibung für die Herzbewegung in der Literatur bereits vorgeschlagen wurde. Denn Spline-Modelle, insbesondere wenn kubische B-Spline-Basisfunktionen verwendet werden, beschreiben eine örtlich und zeitlich glatte Bewegung. Wird ein solches Spline-Modell verwendet, werden üblicherweise Kontrollpunkten Verschiebungsvektoren zugeordnet. Im Rahmen des erfindungsgemäßen Verfahrens bilden diese Verschiebungsvektoren bzw. ihre Komponenten dann den Parametersatz, den es zu optimieren gilt.

Selbstverständlich sind auch andere Bewegungsmodelle denkbar, beispielsweise Dichte-Bewegungsvektorfelder, Free-Form-Deformationen und Finite-Element-Ansätze.

Grundsätzlich ist es möglich, dass als Anfangsparametersatz ein keine Bewegung beschreibender Parametersatz verwendet wird. Insbesondere, wenn nur kleine Bewegungen zu untersuchen sind, führt auch ein solcher Ansatz schnell zu brauchbaren Ergebnissen.

Vorzugsweise jedoch kann der verwendete Anfangsparametersatz auf einer Vorabberechnung basieren, insbesondere einer zweidimensionalen Registrierung von Projektionsbildern oder einer dreidimensionalen Registrierung mehrerer unter Verwendung von Gating unter Annahme periodischer Bewegung durchgeführter Rekonstruktionen. Es können also beispielsweise bereits bekannte Verfahren genutzt werden, um einen guten Anfangspunkt für das erfindungsgemäße Verfahren zu finden. Dabei bieten sich insbesondere zweidimensionale, auf den Projektionsbildern durchgeführte Registrierungsverfahren oder dreidimensionale, beispielsweise bezüglich zu verschiedenen Bewegungsphasen gebildeter Rekonstruktionsdatensätze durchgeführte Registrierungen eingesetzt werden. Beispielsweise können durch Gating zwei oder mehr Rekonstruktionsdatensätze zu bestimmten Bewegungsphasen einer periodischen Bewegung ermittelt und daraus Anfangsparameter mittels einer Registrierung abgeschätzt werden.

Die Zielfunktion beschreibt die Qualität der Bewegungsabschätzung letztlich anhand einer Bewertung der Rekonstruktionsqualität, weshalb sie ein entsprechendes Bewertungsmaß umfasst. Dabei können insbesondere Vergleiche mit den Projektionsdaten der Projektionsbilder oder auch mit Referenzdatensätzen vorgesehen werden, bezüglich welcher dann ein Ähnlichkeitsmaß (bzw. ein Unähnlichkeitsmaß) betrachtet werden kann. In solchen Fällen, aber auch allgemein, kann als Konvergenzkriterium die Minimierung der Zielfunktion verwendet werden, das Optimierungsverfahren sucht also nach einem Minimum der Zielfunktion, wobei dann ein Unähnlichkeitsmaß oder das Negative eines Ähnlichkeitsmaßes hergenommen werden kann.

Insbesondere in Fällen, in denen der Parametersatz viele Parameter umfasst (üblicherweise wird er zwei oder mehr Parameter umfassen), können Lösungen auftreten, die eine besonders ungewöhnliche und im Aufnahmevolumen normalerweise nicht denkbare Bewegung beschreiben. Es sollten jedoch nur plausible Bewegungen betrachtet werden, beispielsweise keine extrem schnellen Bewegungen oder Faltungen, je nach Anwendungsbereich. Dann kann vorgesehen sein, dass die Zielfunktion einen Regularisierungsterm umfasst. Im Falle eines Spline-Modells existieren letztlich zwei Möglichkeiten zur Regularisierung. Zum einen kann die Zahl der Kontrollpunkte so klein gehalten werden, dass nur glatte Deformationen denkbar sind. Um eine größere Flexibilität des Bewegungsmodells zu erreichen, sind jedoch mehr Kontrollpunkte notwendig, so dass ein Regularisierungsterm vorgesehen werden kann. Regularisierungsterme für verschiedene Bewegungsmodelle, insbesondere auch für Spline-Modelle, sind weithin bekannt und müssen hier nicht näher dargelegt werden.

Wie bereits oben erwähnt, kann die Bestimmung des Bewertungsmaßes in der Zielfunktion einen Vergleich umfassen, wobei insbesondere zwei Möglichkeiten denkbar sind, nämlich zum einen ein Vergleich mit den aufgenommenen Projektionsdaten der Projektionsbilder selber, zum anderen aber auch ein Vergleich mit einem dreidimensionalen Referenzdatensatz.

So kann vorgesehen sein, dass als Bewertungsmaß ein Ähnlichkeitsmaß zwischen den Projektionsbildern und durch dynamische Vorwärtsprojektion aus dem aktuellen Rekonstruktionsdatensatz ermittelten Vorwärtsprojektionsbildern insbesondere pixelweise ermittelt wird. An dieser Stelle sei zunächst angemerkt, dass auch ein bei der Minimierung der Zielfunktion zu betrachtendes Unähnlichkeitsmaß (beispielsweise das Negative eines Ähnlichkeitsmaßes) hier umfasst sein soll. Eine derartige Zielfunktion wird also durch die grundlegende Beziehung zwischen der bewegungskompensierten Rekonstruktion und den Projektionsdaten motiviert. Aus dem aktuellen Rekonstruktionsdatensatz kann ermittelt werden, wie die entsprechenden Projektionen aussähen, und zwar durch die sogenannte dynamische Vorwärtsprojektion. Erhalten werden sogenannte "Digital Reconstructed Radiographs" (DRRs) als Vorwärtsprojektionsbilder. Deren Ähnlichkeit mit den tatsächlich aufgenommenen Projektionsbildern kann nun bewertet werden, beispielsweise kann das Quadrat der Abweichung betrachtet werden. Dabei kann insbesondere vorgesehen sein, dass das Bewertungsmaß mit einer zeitlichen Wichtungsfunktion multipliziert wird. Eine solche kann vorgesehen sein, um zeitlich korrelierte Parameter des Bewegungsmodells zu erhalten. Sie ist immer dann sinnvoll, wenn ohne den zusätzlichen Wichtungsterm mehrere Lösungen für das Optimierungsproblem existieren. Dies wiederum kann zu dem Wechsel zwischen unterschiedlichen Lösungen während des Optimierungsverfahrens führen, so dass keine Konvergenz auftritt. Hier kann eine solche bekannte zeitliche Wichtungsfunktion Abhilfe schaffen.

Eine zweite Möglichkeit für ein Bewertungsmaß ist ein Ähnlichkeitsmaß zwischen dem aktuellen Rekonstruktionsdatensatz und einem Referenzdatensatz. Dabei kann der dreidimensionale Referenzdatensatz aus einem insbesondere durch Gating ermittelten, einer gleichen Bewegungsphase einer zugehörigen Bewegung entsprechenden Teil der Projektionsbilder durch Rekonstruktion ermittelt werden. Dies entspricht der Ermittlung eines bewegungskompensierten Rekonstruktionsdatensatzes aus nur einem Teil der Projektionsbilder unter Annahme einer periodischen Bewegung, wie dies eingangs bezüglich des Standes der Technik geschildert wurde. Ein solcher Rekonstruktionsdatensatz mag zwar deutliche qualitative Schwächen offenbaren, da er nur auf einer kleinen Datenbasis beruht, zeigt jedoch die Bewegungsartefakte häufig nicht oder nur in geringer Anzahl, so dass ein Ähnlichkeitsmaß (bzw. Unähnlichkeitsmaß, vgl. oben) zur Formulierung der Zielfunktion genutzt werden kann, um eine hinreichend genaue Abschätzung der tatsächlichen Bewegung zu erhalten. Es sei jedoch angemerkt, dass letztlich der Vergleich mit den originalen Projektionsdaten der Projektionsbilder, wie er in der ersten Alternative durchgeführt wird, zu bevorzugen sein dürfte.

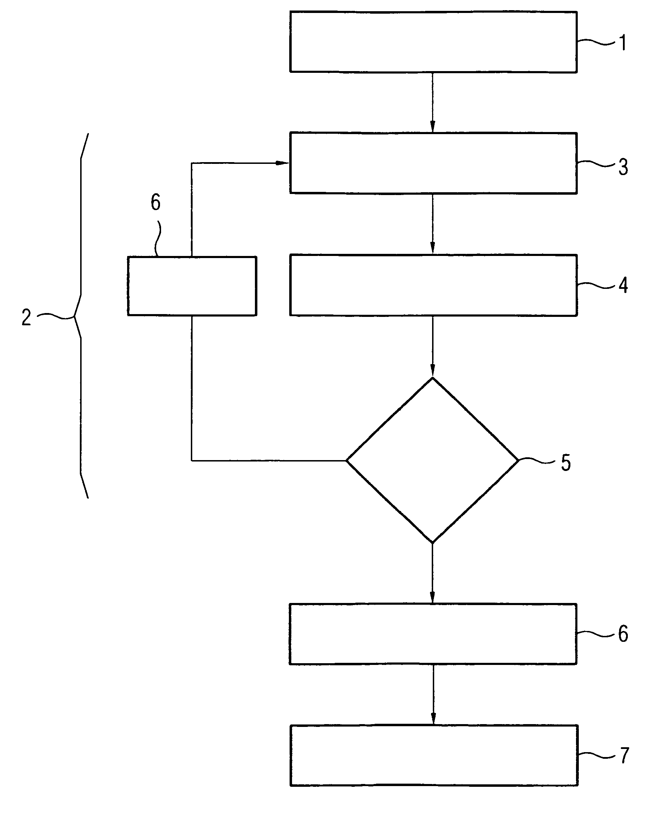

Weitere Vorteile und Einzelheiten der vorliegenden Erfindung ergeben sich aus den im Folgenden dargestellten Ausführungsbeispielen sowie anhand der Zeichnung. Dabei zeigt die einzige Figur einen Ablaufplan des erfindungsgemäßen Verfahrens.

Die Figur zeigt einen groben Ablaufplan des erfindungsgemäßen Verfahrens, welches im Folgenden durch konkrete Ausführungsbeispiele noch näher erläutert werden wird.

Beim erfindungsgemäßen Verfahren geht es um die Rekonstruktion eines dreidimensionalen endgültigen Rekonstruktionsdatensatzes, der bewegungskorrigiert ist, eines bewegten Aufnahmevolumens aus zuvor aufgenommenen zweidimensionalen Projektionsbildern. Es wird vorgeschlagen, ein Optimierungsverfahren zu nutzen, welches von einem eine mögliche Bewegung des Aufnahmevolumens während des Aufnahmezeitraums beschreibenden Anfangsparametersatz ausgeht, welcher die Abbildung von Orten (Voxeln) in einem Bewegungsmodell erlaubt. In diesem Bewegungsmodell wird zur Parametrierung der Zeit die Aufnahmezeit, insbesondere durch Angabe der Nummer des Projektionsbildes in der Aufnahmereihenfolge, verwendet.

Dabei kann im erfindungsgemäßen Verfahren grundsätzlich von einem Parametersatz ausgegangen werden, der keine Bewegung beschreibt, bei dem also alle Voxel über die Zeit unverändert bleiben, jedoch ist es auch denkbar, beispielsweise andere Verfahren zu nutzen, um eine gute Ausgangsbewegung zu finden. Beispielsweise kann der verwendete Anfangsparametersatz auf einer Vorabberechnung basieren. Denkbar ist hierbei eine zweidimensionale Registrierung von Projektionsbildern, jedoch auch ein dreidimensionales Registrierungsverfahren, dem mehrere unter Verwendung von Gating unter Annahme periodischer Bewegung durchgeführte Rekonstruktionen zugrunde liegen. Ein derartiges Verfahren kann im Übrigen auch zur Ermittlung eines Referenzdatensatzes, mit dem im folgenden Optimierungsverfahren 2 verglichen wird, genutzt werden, worauf im Folgenden noch näher eingegangen werden wird. In der Figur markiert der Schritt 1 die Definition des Anfangsparametersatzes.

Es schließt sich nun das Optimierungsverfahren 2 an, bei welchem die Parameter des Parametersatzes im Hinblick auf die tatsächliche Bewegung, also die bessere Rekonstruktionsqualität, optimiert werden sollen. Zunächst wird der Anfangsparametersatz als erster aktueller Parametersatz angesetzt, so dass in einem Schritt 3 mittels eines insbesondere analytischen dynamischen Rekonstruktionsalgorithmus ein aktueller Rekonstruktionsdatensatz, der folglich auf der aktuellen Bewegung, beschrieben durch den aktuellen Parametersatz, basiert, ermittelt werden kann.

In einem Schritt 4 wird dann eine Zielfunktion berechnet, die ein Bewertungsmaß für den aktuellen Rekonstruktionsdatensatz umfasst. Hierbei sind - neben der gegebenenfalls vorgesehenen Verwendung eines Regularisierungsterms - als Bewertungsmaß konkret zwei Möglichkeiten denkbar: Ein Vergleich von aus dem aktuellen Rekonstruktionsdatensatz abgeleiteten Vorwärtsprojektionsbildern mit den tatsächlichen Projektionsbildern, was bevorzugt wird, oder aber ein Vergleich des aktuellen Rekonstruktionsdatensatzes mit einem Referenzdatensatz. Beispielsweise, wie bereits erwähnt, kann der Referenzdatensatz aus einem durch Gating ermittelten, einer gleichen Bewegungsphase einer zugehörigen Bewegung entsprechenden Teil der Projektionsbilder durch Rekonstruktion ermittelt werden.

In einem Schritt 5 wird dann das Konvergenzkriterium des Optimierungsverfahrens 2 überprüft. Beispielsweise kann vorgesehen sein, dass die Zielfunktion minimiert werden soll. Ist das Konvergenzkriterium noch nicht erfüllt, so wird in einem Schritt 6 ein neuer aktueller Parametersatz gemäß dem verwendeten Optimierungsverfahren 2 ermittelt, woraufhin wiederum die Schritte 3 - 5 mit dem neuen aktuellen Parametersatz durchgeführt werden. Ist schließlich Konvergenz gegeben, also eine Lösung gefunden, die möglichst exakt der tatsächlichen Bewegung entspricht, so kann in einem Schritt 7 das Optimierungsverfahren 2 beendet werden, wobei der nun aktuelle Rekonstruktionsdatensatz den endgültigen Rekonstruktionsdatensatz bildet, der mithin optimal bewegungskorrigiert ist. Neben diesem endgültigen Rekonstruktionsdatensatz kann jedoch auch der endgültige Parametersatz, der also die tatsächliche Bewegung zumindest im Wesentlichen Beschreibt, abgespeichert werden. Denn in einem optionalen Schritt 8 des Verfahrens kann dieser weiter genutzt werden, um beispielsweise eine vierdimensionale Darstellung des Aufnahmevolumens zu erzeugen und darzustellen oder auch weitere die Bewegung beschreibende Auswerteparameter zu ermitteln. So können beispielsweise bei Anwendung im Herzbereich Arrhythmien bzw. irreguläre Herzphasen zeitaufgelöst dargestellt werden und Arrhythmien beschreibende Auswerteparameter ermittelt werden.

Es sei angemerkt, dass im Optimierungsverfahren 2 selbstverständlich auch Nebenbedingungen, die beispielsweise Annahmen über die Bewegung enthalten, verwendet werden können, um den Lösungsraum zu beschränken. Letztlich kann jedes beliebige Optimierungsverfahren verwendet werden, wobei in den folgenden Ausführungsbeispielen gradientenbasierte Optimierungsverfahren gemeinsam mit analytischen dynamischen Rekonstruktionsalgorithmen und glatten Zielfunktionen Verwendung finden, da dann die Gradienten bezüglich des Parametersatzes analytisch ermittelt werden können und somit eine effiziente Optimierung erfolgen kann.

Bevor nun konkrete Anwendungsbeispiele diskutiert werden, sollen zunächst einige grundlegende Begriffe definiert werden.

So wird im Folgenden die Projektionsdatenabbildung p verwendet werden, wobei p(i,$\mathbf{u}$) den gemessenen Bildwert des i-ten Projektionsbildes am Pixel $\mathbf{u}$ liefert. Die Gesamtzahl der Projektionsbilder sei mit N bezeichnet, i kann also der Menge {1...N} entnommen werden.

Ferner wird die Projektionsfunktion A benötigt, wobei A(i,$\mathbf{x}$)=$\mathbf{u}$ ein Voxel $\mathbf{x}$ auf einen Pixelort $\mathbf{u}$ im i-ten Projektionsbild abbildet.

Für die Beschreibung der Projektionsstrahlen, die den Strahlungsdetektor am Pixel $\mathbf{u}$ zum Zeitpunkt des Projektionsbildes i treffen, also die Voxel $\mathbf{x} \in L_{i,\,u}$, muss die Bedingung A(i,$\mathbf{x}$)=$\mathbf{u}$ erfüllt sein.

Besonders wichtig für das erfindungsgemäße Verfahren sind das Bewegungsmodell und die dynamische, also bewegungskompensierte Rekonstruktion. Das Bewegungsmodell, welches allgemein durch eine Abbildung M aus den Räumen {1...N}, dem Raum der Voxel/Orte im Aufnahmevolumen und dem Parameterraum S in den Raum der Voxel/ Orte im Aufnahmevolumen beschrieben werden kann, ist eine invertierbare Funktion M(i,$\mathbf{x}$,s)=$\mathbf{x}$', die ein Voxel $\mathbf{x}$ für das i-te Projektionsbild (also den Zeitpunkt der Aufnahme des i-ten Projektionsbilds) auf einen neuen Ort $\mathbf{x}$' abbildet. Dabei bezeichnet $\mathbf{s}$ den Vektor der Parameter des Bewegungsmodells, im Folgenden kurz den Parametersatz s $\in$ S.

Der dynamische Rekonstruktionsalgorithmus wird durch die Funktion f($\mathbf{x}$,s) beschrieben, die den rekonstruierten Schwächungswert bei dem Voxel **x** basierend auf dem Bewegungsmodell, also dem aktuellen Parametersatz s wiedergibt. Es ist also nicht nur eine Abhängigkeit vom Voxelort gegeben, wie im statischen Fall, sondern auch von dem Parametersatz, der die Bewegung im Aufnahmevolumen bestimmt.

Das konkrete hier vorgestellte Ausführungsbeispiel ist insbesondere für Bewegungen im Herzbereich besonders geeignet. Daher wird ein nicht periodisches vierdimensionales B-Spline-Bewegungsmodell verwendet, welches sich bereits mehrfach als geeignet zur Beschreibung von Herzbewegungen gezeigt hat, insbesondere, da es eine örtlich und zeitlich glatte Bewegung erlaubt. Ein Satz von $C_j \times C_k \times C_l \times C_t$ Kontrollpunkten wird gleichförmig in Raum und Zeit verteilt. Jedem Kontrollpunkt wird ein Verschiebungsvektor zugeordnet, welche Verschiebungsvektoren den Parametersatz s im Raum S definieren. Formal kann das Bewegungsmodell dann durch die Formel

$$M(i, \mathbf{x}, \mathbf{s}) = \mathbf{x} + \sum_{j,k,l,t} B_j(x_0) B_k(x_1) B_l(x_2) B_t(i) s_{jklt}$$

beschrieben werden, worin $B_{j\text{-}t}$ die kubischen B-Spline-Basisfunktionen bezeichnen und **x** die Komponenten $\mathbf{x} = (x_0, x_1, x_2)$ aufweist.

Dabei muss darauf geachtet werden, dass nur plausible Bewebungen berücksichtigt werden, wie oben dargestellt, was durch eine kleine Zahl an Kontrollpunkten oder einen zusätzlichen Regularisierungsterm in der Zielfunktion erreicht werden kann. Der Einfachheit halber wird in diesem Ausführungsbeispiel der erste Zugang gewählt, so dass kein Regularisierungsterm erforderlich ist.

Als dynamischer Rekonstruktionsalgorithmus wird in diesem Ausführungsbeispiel ein FDK-Algorithmus verwendet. Dieser wird beschrieben durch eine Funktion f(**x**,s). Die Funktion f liefert den rekonstruierten Grauwert an einem Voxel **x** basierend auf dem Parametersatz **s**,

$$f(\mathbf{x}, \mathbf{s}) = \sum_{i} w(i, M(i, \mathbf{x}, \mathbf{s})) \cdot \overline{p}(i, A(i, M(i, \mathbf{x}, \mathbf{s})))$$

wobei w das Abstandsgewicht in der FDK-Formel und $\overline{p}$ die vorverarbeiteten, gefilterten und redundanzgewichteten Projektionsdaten sind.

Hieraus kann nun ein aktueller Rekonstruktionsdatensatz bestimmt werden. Dieser wird dann zur Auswertung der Zielfunktion des Optimierungsverfahrens verwendet. In diesem Ausführungsbeispiel sollen in dem dreidimensionalen Optimierungsproblem diejenigen Zielparameter, also der Zielparametersatz s', bestimmt werden, die die Zielfunktion Z minimieren.

Vorliegend wird eine Zielfunktion verwendet, die aus dem aktuellen Rekonstruktionsdatensatz ermittelte Vorwärtsprojektionsbilder mit den tatsächlichen Projektionsbildern vergleicht. Die dynamische Vorwärtsprojektion kann dabei über die Formel

$$r(i, \mathbf{u}, \mathbf{s}) = \sum_{x \in L_{i,u}} f(M^{-1}(i, \mathbf{x}, \mathbf{s}), \mathbf{s})$$

beschrieben werden.

Die Zielfunktion umfasst nun ein pixelweises Unähnlichkeitsmaß d(p(i,u),r(i,u,s)), beispielsweise die quadratische Abweichung $d(x,y) = (x-y)^2$. Formal lässt sich die Zielfunktion schreiben als

$$Z_{2D}(\mathbf{s}) = \sum_{i} W_t(i) \left( \sum_{u} d(p(i, \mathbf{u}), r(i, \mathbf{u}, \mathbf{s})) \right)$$

wobei der Ausdruck $W_t(i)$ eine zeitliche Wichtungsfunktion darstellt, so dass zeitkorrelierte Bewegungsmodellparameter erhalten werden können.

Zur Optimierung kann beispielsweise ein SPSA-Algorithmus (Simultaneous Perturbation Stochastic Approximation) verwendet werden, wobei jedoch auch andere gradientenbasierte Optimierungsverfahren Anwendung finden können.

Eine andere Möglichkeit zur Definition des Bewertungsmaßes in der Zielfunktion ist die Übereinstimmung mit einem Referenzdatensatz. Dies ist immer dann möglich, wenn ein Referenzdatensatz verfügbar ist, der beispielsweise über ein anderes, weniger genaues Verfahren ermittelt worden ist, aber letztlich von Bewegungsartefakten schon teilweise befreit ist. Das Bewertungsmaß in der Zielfunktion wird dann so definiert, dass die Unähnlichkeit des Referenzdatensatzes und des aktuellen Rekonstruktionsdatensatzes basierend auf dem Parametersatz bestimmt wird. Dabei kann auch hier ein voxelweises Unähnlichkeitsmaß $\delta$ verwendet werden. Formal kann man folglich schreiben:

$$Z_{3D}(\mathbf{s}) = \sum_{x} \delta\left(f_{R}(\mathbf{x}), f(\mathbf{x}, \mathbf{s})\right),$$

wobei $f_{R}(x)$ den dreidimensionalen Referenzdatensatz beschreibt.

Bezugszeichenliste

1 Schritt

2 Optimierungsverfahren

3 Schritt

4 Schritt

5 Schritt

6 Schritt

7 Schritt

8 Schritt

**Patentansprüche**

1. Verfahren zur bewegungskompensierten Rekonstruktion eines dreidimensionalen endgültigen Rekonstruktionsdatensatzes eines während eines Aufnahmezeitraums bewegten Aufnahmevolumens aus zweidimensionalen Projektionsbildern unter Verwendung eines dynamischen, insbesondere analytischen Rekonstruktionsalgorithmus, **dadurch gekennzeichnet, dass** zur Ermittlung der insbesondere ortsabhängigen, insbesondere nichtperiodischen Bewegung während der Aufnahmezeit

    - ein eine mögliche Bewegung in wenigstens einem Bewegungsmodell, in dem die Zeitabhängigkeit durch die Aufnahmezeit beschrieben wird, beschreibender Anfangsparametersatz als aktueller Parametersatz angesetzt wird,
    - im Rahmen eines Optimierungsverfahrens bezüglich des Parametersatzes ein aktueller Rekonstruktionsdatensatz mittels des dynamischen Rekonstruktionsalgorithmus unter Berücksichtigung der durch den aktuellen Parametersatz beschriebenen möglichen Bewegung ermittelt und anhand einer ein Bewertungsmaß umfassenden Zielfunktion bewertet wird,
    - bei Erfüllung eines Konvergenzkriteriums für die Zielfunktion das Optimierungsverfahren beendet und der aktuelle Rekonstruktionsdatensatz als endgültiger Rekonstruktionsdatensatz verwendet wird.

2. Verfahren nach Anspruch 1, **dadurch gekennzeichnet , dass** das Bewegungsmodell ein affine Bewegungen beschreibendes Bewegungsmodell umfasst.

**3.** Verfahren nach Anspruch 1 oder 2, **dadurch gekennzeichnet , dass** das Bewegungsmodell ein vierdimensionales Spline-Modell, vorzugsweise unter Verwendung von insbesondere kubischen B-Spline-Basisfunktionen, umfasst.

**4.** Verfahren nach Anspruch 3, **dadurch gekennzeichnet , dass** den Kontrollpunkten den Parametersatz bildende Verschiebungsvektoren zugeordnet werden.

**5.** Verfahren nach einem der vorangehenden Ansprüche, **dadurch gekennzeichnet, dass** als Anfangsparametersatz ein keine Bewegung beschreibender Parametersatz verwendet wird.

**6.** Verfahren nach einem der Ansprüche 1 bis 4, **dadurch gekennzeichnet, dass** der verwendete Anfangsparametersatz auf einer Vorabberechnung basiert, insbesondere einer zweidimensionalen Registrierung von Projektionsbildern oder einer dreidimensionalen Registrierung mehrerer unter Verwendung von Gating unter Annahme periodischer Bewegung durchgeführter Rekonstruktionen.

**7.** Verfahren nach einem der vorangehenden Ansprüche, **dadurch gekennzeichnet, dass** als Konvergenzkriterium die Minimierung der Zielfunktion verwendet wird.

**8.** Verfahren nach einem der vorangehenden Ansprüche, **dadurch gekennzeichnet, dass** die Zielfunktion einen Regularisierungsterm umfasst.

**9.** Verfahren nach einem der vorangehenden Ansprüche, **dadurch gekennzeichnet, dass** als Bewertungsmaß ein Ähnlichkeitsmaß zwischen den Projektionsbildern und durch dynamische Vorwärtsprojektion aus dem aktuellen Rekonstruktionsdatensatz ermittelten Vorwärtsprojektionsbildern insbesondere pixelweise ermittelt wird.

**10.** Verfahren nach Anspruch 9, **dadurch gekennzeichnet, dass** das Bewertungsmaß mit einer zeitlichen Wichtungsfunktion multipliziert wird.

**11.** Verfahren nach einem der Ansprüche 1 bis 8, **dadurch gekennzeichnet , dass** als Bewertungsmaß ein Ähnlichkeitsmaß zwischen dem aktuellen Rekonstruktionsdatensatz und einem Referenzdatensatz ermittelt wird.

**12.** Verfahren nach Anspruch 11, **dadurch gekennzeichnet, dass** der Referenzdatensatz aus einem insbesondere durch Gating ermittelten, einer gleichen Bewegungsphase einer zugehörigen Bewegung entsprechenden Teil der Projektionsbilder durch Rekonstruktion ermittelt wird.

**13.** Verfahren nach einem der vorangehenden Ansprüche, **dadurch gekennzeichnet, dass** als Rekonstruktionsalgorithmus ein dynamischer FDK-Algorithmus verwendet wird.

**14.** Verfahren nach einem der vorangehenden Ansprüche, **dadurch gekennzeichnet, dass** ein gradientenbasiertes Optimierungsverfahren verwendet wird.

**15.** Verfahren nach einem der vorangehenden Ansprüche, **dadurch gekennzeichnet, dass** der dem endgültigen Rekonstruktionsdatensatz zugrunde liegende endgültige Parametersatz gespeichert wird.

**16.** Verfahren nach Anspruch 15, **dadurch gekennzeichnet, dass** aufgrund des Parametersatzes eine vierdimensionale Darstellung des Aufnahmevolumens erzeugt und dargestellt wird.

**17.** Verfahren nach Anspruch 15 oder 16, **dadurch gekennzeichnet, dass** aus dem Parametersatz die Bewegung beschreibende Auswerteparameter, insbesondere Arrhythmien beschreibende Auswerteparameter, ermittelt werden.

**Claims**

**1.** Method for movement-compensated reconstruction of a three-dimensional final reconstruction dataset of an imaging volume moved during a recording period from two-dimensional projection images using a dynamic, especially analytical reconstruction algorithm, **characterised in that**, for determining the especially location-dependent, non-periodic movement during the recording time,

- an initial parameter set describing a possible movement in at least one movement model in which the time dependence is described by the recording time is employed as the current parameter set,
- within the framework of an optimisation method relating to the parameter set, a current reconstruction dataset is determined by means of the dynamic reconstruction algorithm, taking account of the possible movement described by the current parameter set and is analysed on the basis of a target function comprising an analysis measure,
- if a convergence criterion for the target function is fulfilled the optimisation method is ended and the current reconstruction dataset is used as the final reconstruction dataset.

2. Method according to claim 1, **characterised in that** the movement model comprises a movement model describing affine movements.

3. Method according to claim 1 or 2, **characterised in that** the movement model comprises a four-dimensional spline model, preferably using especially cubic B spline basic functions.

4. Method according to claim 3, **characterised in that** the control points are assigned displacement vectors forming the parameter set.

5. Method according to one of the preceding claims, **characterised in that** a parameter set not describing any movement is used as the initial parameter set.

6. Method according to one of claims 1 to 4, **characterised in that** the initial parameter set used is based on a prior calculation, especially a two-dimensional registration of projection images or a three-dimensional registration of a number of reconstructions carried out using gating assuming periodic movement.

7. Method according to one of the preceding claims, **characterised in that** the minimisation of the target function is used as the convergence criterion.

8. Method according to one of the preceding claims, **characterised in that** the target function comprises a regularisation term.

9. Method according to one of the preceding claims, **characterised in that** a measure of similarity between the projection images is used as the analysis measure and that forward projection images determined by dynamic forward projection from the current reconstruction dataset are especially determined pixel-by-pixel.

10. Method according to claim 9, **characterised in that** the analysis measure is multiplied by a temporal weighting function.

11. Method according to one of claims 1 to 8, **characterised in that** a measure of similarity between the current dataset and a reference dataset is determined as the analysis measure.

12. Method according to claim 11, **characterised in that** the reference dataset is determined by reconstruction, especially by gating, from a part of the projection images corresponding to an identical movement phase of an associated movement.

13. Method according to one of the preceding claims, **characterised in that** a dynamic FDK algorithm is used as the reconstruction algorithm.

14. Method according to one of the preceding claims, **characterised in that** a gradient-based optimisation method is used.

15. Method according to one of the preceding claims, **characterised in that** the final parameter set underlying the final reconstruction dataset is stored.

16. Method according to claim 15, **characterised in that** a four-dimensional representation of the imaging volume is created and presented on the basis of the parameter set.

17. Method according to claim 15 or 16, **characterised in that** the analysis parameters describing the movement, especially analysis parameters describing arrhythmias, are determined from the parameter set.

**Revendications**

1. Procédé de reconstruction avec compensation de mouvement d'un jeu définitif de données de reconstruction tridimensionnelles d'un volume de prise de vue en mouvement pendant une période de prise de vue, à partir d'images de projection bidimensionnelles, avec utilisation d'un algorithme de reconstruction dynamique, et plus particulièrement analytique, **caractérisé en ce que**, pour déterminer le mouvement, en particulier dépendant de la localisation et en particulier non périodique, pendant le temps de prise de vue :

   - un jeu de paramètres de départ décrivant un mouvement possible dans au moins un modèle de mouvement dans lequel la dépendance par rapport au temps est décrite par le temps de prise de vue est pris comme jeu de paramètres actuel ;
   - dans le cadre d'un procédé d'optimisation concernant le jeu de paramètres, un jeu actuel de données de reconstruction est déterminé au moyen de l'algorithme de reconstruction dynamique compte tenu du mouvement possible décrit par le jeu de paramètres actuel et est évalué à l'aide d'une fonction cible comprenant une mesure d'évaluation ;
   - lorsqu'un critère de convergence pour la fonction cible est rempli, il est mis fin au procédé d'optimisation et le jeu actuel de données de reconstruction est utilisé comme jeu définitif de données de reconstruction.

2. Procédé selon la revendication 1, **caractérisé en ce que** le modèle de mouvement comprend un modèle de mouvement qui décrit des mouvements affines.

3. Procédé selon la revendication 1 ou 2, **caractérisé en ce** le modèle de mouvement comprend un modèle de spline quadridimensionnel, de préférence avec utilisation de fonctions de base spline B, notamment cubiques.

4. Procédé selon la revendication 3, **caractérisé en ce que** des vecteurs de déplacement qui constituent le jeu de paramètres sont associés aux points de contrôle.

5. Procédé selon l'une des revendications précédentes, **caractérisé en ce qu'**est utilisé, en tant que jeu de paramètres de départ, un jeu de paramètres qui ne décrit pas de mouvement.

6. Procédé selon l'une des revendications 1 à 4, **caractérisé en ce que** le jeu de paramètres de départ utilisé est basé sur un calcul préalable, en particulier sur enregistrement bidimensionnel d'images de projection ou sur enregistrement tridimensionnel de plusieurs reconstructions effectuées en utilisant une méthode de gating dans l'hypothèse d'un mouvement périodique.

7. Procédé selon l'une des revendications précédentes, **caractérisé en ce qu'**est utilisée, en tant que critère de convergence, la minimisation de la fonction cible.

8. Procédé selon l'une des revendications précédentes, **caractérisé en ce que** la fonction cible inclut un terme de régularisation.

9. Procédé selon l'une des revendications précédentes, **caractérisé en ce qu'**est déterminée, en tant que mesure d'évaluation, et plus particulièrement pixel par pixel, une mesure de similitude entre les images de projection et des images de projection avant déterminées par projection avant dynamique à partir du jeu actuel de données de reconstruction.

10. Procédé selon la revendication 9, **caractérisé en ce que** la mesure d'évaluation est multipliée par une fonction de pondération temporelle.

11. Procédé selon l'une des revendications 1 à 8, **caractérisé en ce qu'**est déterminée, en tant que mesure d'évaluation, une mesure de similitude entre le jeu actuel de données de reconstruction et un jeu de données de référence.

12. Procédé selon la revendication 11, **caractérisé en ce que** le jeu de données de référence est déterminé par reconstruction à partir d'une partie des images de projection déterminée notamment par une méthode de gating et correspondant à une même phase de mouvement d'un mouvement associé.

**13.** Procédé selon l'une des revendications précédentes, **caractérisé en ce qu'**est utilisé, en tant qu'algorithme de reconstruction, un algorithme FDK dynamique.

**14.** Procédé selon l'une des revendications précédentes, **caractérisé en ce qu'**est utilisé un procédé d'optimisation basé sur des gradients.

**15.** Procédé selon l'une des revendications précédentes, **caractérisé en ce que** le jeu de paramètres définitif qui est à la base du jeu définitif de données de reconstruction est mis en mémoire.

**16.** Procédé selon la revendication 15, **caractérisé en ce qu'**est créée et représentée, sur la base du jeu de paramètres, une représentation quadridimensionnelle du volume de prise de vue.

**17.** Procédé selon la revendication 15 ou 16, **caractérisé en ce que** sont déterminés, à partir du jeu de paramètres, des paramètres d'évaluation qui décrivent le mouvement, et plus particulièrement des paramètres d'évaluation qui décrivent des arythmies.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **Christopher Rotkohl et al.** C-arm CT: Reconstruction of dynamic high contrast objects applied to the coronary sinus. *Nuclear Science Symposium 2008 Conference Record,* 19. Oktober 2008, ISBN 978-1-4244-2714-7, 5113-5120